# EUROPÄISCHE PATENTSCHRIFT

(11) **EP 3 552 063 B1**
(45) Veröffentlichungstag und Bekanntmachung des Hinweises auf die Patenterteilung: **15.09.2021**
(21) Anmeldenummer: 17805115.7
(22) Anmeldetag: 08.11.2017
(51) Int. Cl.: G05B 19/042

(54) **VERFAHREN ZUR AUTOMATISCHEN KONFIGURATION VON FUNKTIONSEINHEITEN EINES AUTOMATISIERUNGSSYSTEMS**
METHOD FOR AUTOMATICALLY CONFIGURING FUNCTIONAL UNITS OF AN AUTOMATION SYSTEM
PROCÉDÉ DE CONFIGURATION AUTOMATIQUE D'UNITÉS FONCTIONNELLES D'UN SYSTÈME D'AUTOMATISATION

(30) Priorität: 12.01.2017 EP 17151205
(43) Veröffentlichungstag der Anmeldung: 16.10.2019
(73) Patentinhaber: Siemens Aktiengesellschaft, 80333 München (DE)
(72) Erfinder: ADLER, Michael, 90469 Nürnberg (DE); HOFMANN, Klaus-Peter, 91086 Aurachtal-Münchaurach (DE)
(86) Internationale Anmeldenummer: PCT/EP2017/078591
(87) Internationale Veröffentlichungsnummer: WO 2018/130320

(56) Entgegenhaltungen:
- US-A1- 2013 211 546
- US-A1- 2015 121 485

## Beschreibung

Verfahren zur automatischen Konfiguration von Funktionseinheiten eines Automatisierungssystems.

Die Erfindung betrifft ein Verfahren zur automatischen Konfiguration eines oder mehrerer Software-Agenten zu einem Automatisierungssystem, nämlich ein Verfahren zur automatischen Konfiguration von Funktionseinheiten des Automatisierungssystems auf Basis der erstellten Daten. Bei den zu konfigurierenden Funktionseinheiten handelt es sich zum Beispiel um sogenannte Software-Agenten.

Das sogenannte Internet der Dinge (Internet of Things) ist ein neuer Name für einen grundsätzlich bekannten Trend in der Datenverarbeitung, insbesondere in der Datenverarbeitung im Zusammenhang mit einer Automatisierung eines technischen Prozesses oder technischer Prozesse. Mehr und mehr der zur Automatisierung verwendeten Geräte besitzen einen Internetanschluss oder sind über das Internet kommunikativ miteinander verbunden.

Im Folgenden wird ein zu automatisierender technischer Prozess zusammen mit einem zu dessen Automatisierung bestimmten Automatisierungssystem kurz als Automatisierungslösung bezeichnet. Eine solche Automatisierungslösung umfasst üblicherweise eine Vielzahl von Aggregaten, Maschinen, Automatisierungsgeräten und dergleichen, die bei einer ganz allgemeinen Betrachtung Datenquellen (Assets) darstellen. Zum Erfassen von Daten von solchen Datenquellen werden sogenannte Agenten (Software-Agenten) verwendet. Ein Agent erfasst Daten einer Datenquelle und sendet diese über eine Internet-Verbindung in die sogenannte Cloud. Dort werden die Daten zum Beispiel gespeichert und/oder verarbeitet.

Jeder Agent muss konfiguriert und/oder parametriert werden. Zum Beispiel muss der Agent im Rahmen einer Netzwerk-Konfiguration eine eindeutige Adresse, insbesondere eine IP-Adresse, erhalten. Des Weiteren muss jedem Agenten ein eindeutiger Bezeichner (Identity) sowie eine oder mehrere von dem Agenten zu verwendende Datenquelle bzw. Datenquellen zugewiesen werden. Daten, die in einen Speicher des Agenten zu laden sind und zu diesem Zweck zum Beispiel über das Internet an den Agenten zu übertragen sind, umfassen Software-Updates, Zertifikate oder allgemein Zugangsdaten zum Zugriff zum Beispiel auf einzelne Datenquellen oder zur Authentifizierung gegenüber der Cloud oder einem Dienst in der Cloud.

Bisher wird eine solche Konfigurierung/Parametrierung eines Agenten manuell durch einen Benutzer durchgeführt, zum Beispiel indem dieser die Daten mittels eines mobilen Datenträgers, zum Beispiel in Form eines USB-Sticks oder dergleichen, zum Ort der Automatisierungslösung bringt und dort gespeicherte Daten an zumindest einen Agenten überträgt. Ein Software-Update kann über das Internet erfolgen. Wegen des teilweise erheblichen Datenvolumens ist damit aber ein nicht unbeachtlicher Ressourcenverbrauch verbunden.

Mit der ständig wachsenden Komplexität von Automatisierungslösungen steigt die Anzahl der davon umfassten Funktionseinheiten. Eine manuelle Konfigurierung/Parametrierung aller einer Automatisierungslösung zugeordneter Agenten ist daher aufwändig und vor allem fehleranfällig.

Die Patentanmeldung US 2013211546 A1 offenbart ein Cloudfähiges intelligentes Gerät, das die automatisierte Konfiguration und Integration des Geräts in ein Automatisierungssystem ermöglicht. Bei der Installation innerhalb des Automatisierungssystems bestimmt das intelligente Gerät seinen geografischen Standort, identifiziert andere Geräte im System und bestimmt seine Rolle innerhalb des Systems. Das intelligente Gerät stellt dann die Kommunikation mit einer Cloud-Plattform her, auf der eine oder mehrere cloudbasierte Anwendungen oder Dienste ausgeführt werden, und sendet ein Geräteprofil, das die gesammelten Informationen enthält, an die Cloud-Plattform. Das Geräteprofil kann verwendet werden, um das Gerät automatisch für den Betrieb innerhalb des Systems zu konfigurieren oder um das Smart-Gerät zu einer bestehenden Cloud-basierten Anwendung hinzuzufügen.

Die Patentanmeldung US 2015121485 A1 offenbart Computergeräte, die an ein Netzwerk gekoppelt sind und automatisch konfiguriert werden. Systeminformationen werden von einer Mehrzahl von Computervorrichtungen mittels eines Agenten und / oder eines Scouts gesammelt. Diese Information ist standardisiert und in einer oder mehreren Datenbanken gespeichert. Eine Programmfunktion wird aus der standardisierten Information bestimmt. Diese Programmfunktion wird verwendet, um zwei verschiedene Gruppen von Computerprogrammen zu identifizieren, die auf einer Reihe von vernetzten Computergeräten installiert sind. Diese Konfiguration wird dann durch eine Konfiguration ersetzt, bei der nur ein einziges gemeinsames Computerprogramm zum Ausführen der Programmfunktion verwendet wird.

Eine Aufgabe der vorliegenden Erfindung besteht ausgehend von den vorstehend skizzierten Nachteilen darin, ein Verfahren zur automatischen Konfiguration von Funktionseinheiten eines Automatisierungssystems anzugeben, welches zumindest einzelne Nachteile vermeidet oder deren Auswirkungen reduziert.

Gemäß einer Ausgestaltung wird ein Verfahren zur automatischen Konfiguration eines oder mehrerer Software-Agenten zu einem Automatisierungssystem vorgeschlagen. Dem Automatisierungssystem sind mehrere Software-Agenten zugeordnet, wobei die Software-Agenten über ein (gemeinsames) Gateway mit der Cloud verbunden sind. Ein oder mehrere Software-Agenten können dabei in dem Gateway vorhanden sein und/oder in Kommunikationsverbindung mit dem Gateway stehen.

In der Cloud ist für die Software-Agenten jeweils eine Agentenkonfiguration vorgehalten. Jeder Software-Agent kann somit über eine ihm zugeordnete Agentenkonfiguration verfügen. Bei der Agentenkonfiguration kann es sich, bspw. durch einen Nutzer, vorgegebene Agentenkonfiguration handeln.

Ferner werden von zumindest einem Teil der Software-Agenten erfasste Daten bezüglich von dem jeweiligen Softwareagenten erreichbaren wenigstens einem Gerät, Dienst, und/oder Datenquelle des Automatisierungssystems von dem Gateway empfangen. Diese Daten können bspw. in Form einer Liste vorliegen.

Vermittels des Gateways wird im Rahmen einer Verarbeitung einer oder mehrere Agentenkonfigurationen aus der Cloud sowie der erfassten Daten bezüglich von dem jeweiligen Softwareagenten erreichbaren wenigstens einen Gerät, Dienst und/oder Datenquelle eine Konfiguration zumindest eines dem Automatisierungssystem zugeordneten Software-Agenten vorgenommen. Dafür kann bspw. eine Agentenkonfiguration einer einem Software-Agenten anhand der Daten bezüglich von dem jeweiligen Software-Agenten erreichbaren Gerät(en), Dienst(en) und/oder Datenquelle(n) zugeordnet werden.

Vorzugsweise sind die Software-Agenten über das Gateway mit der Cloud verbunden, weisen also bevorzugt keine eigene (direkte) Verbindung zur Cloud auf.

Gemäß einer weiteren Ausgestaltung wird ein Verfahren zur automatischen Konfiguration eines oder mehrerer Software-Agenten zu einem Automatisierungssystem, nämlich Daten zur automatischen Konfiguration von Funktionseinheiten eines Automatisierungssystems, vorgeschlagen. Dabei ist Folgendes vorgesehen: Dem Automatisierungssystem ist als zu konfigurierende Funktionseinheit zumindest ein Software-Agent zugeordnet. Der oder jeder Software-Agent ist über ein Gateway mit der sogenannten Cloud verbunden. In der Cloud ist für eine Mehrzahl von Software-Agenten - zum Beispiel auch für Software-Agenten anderer Automatisierungssysteme - eine Agentenkonfiguration vorgehalten. Jeder Software-Agent eines Automatisierungssystems erfasst Daten bezüglich lokal erreichbarer - also für den Agenten erreichbarer - Geräte, Dienste, Datenquellen und dergleichen und diese werden in Form einer Geräteliste an das Gateway übermittelt. Das Gateway erkennt automatisch im Rahmen einer Verarbeitung der Agentenkonfiguration aus der Cloud sowie der Geräteliste Übereinstimmungen in beiden Datengruppen. Auf der Basis erkannter Übereinstimmungen sowie von der Agentenkonfiguration umfasster Daten nimmt das Gateway abschließend und ebenfalls automatisch eine Konfiguration des oder der dem Automatisierungssystem zugeordneten Software-Agenten vor.

Der Vorteil der Erfindung besteht in der deutlich vereinfachten Konfigurierung/Parametrierung von in einer Automatisierungslösung als Schnittstelle zur sogenannten Cloud verwendeten Software-Agenten. Die Vereinfachung ergibt sich daraus, dass alle benötigten Daten automatisch in einen jeweiligen Speicher des oder der Software-Agenten geladen werden.

Bisher erfolgt eine solche Konfigurierung/Parametrierung, indem ein Benutzer über eine Webseite die Konfiguration vornimmt. Durch das hier vorgeschlagene Verfahren wird festgestellt, welcher Software-Agent oder welche Software-Agenten Konfigurationsdaten benötigen (zum Beispiel aufgrund eines Austausches des Geräts, auf dem der Software-Agent ausgeführt wird), und die zur Konfiguration notwendigen Daten werden automatisch ermittelt und an den jeweiligen Software-Agenten übermittelt. Ein manueller Eingriff ist nicht mehr erforderlich. Diese Vereinfachung führt zu einer deutlichen Verringerung der Wartungskosten.

Das im Folgenden beschriebene Verfahren ist zur automatischen Ausführung in Form eines Computerprogramms realisiert, ggf. in Form eines verteilten Computerprogramms. Das Computerprogramm ist zur Ausführung durch ein als Schnittstelle zur Cloud fungierendes und entsprechend der üblichen Terminologie als Gateway bezeichnetes Gerät bestimmt. Wenn im Folgenden Verfahrensschritte oder Verfahrensschrittfolgen beschrieben werden, bezieht sich dies auf Aktionen, die aufgrund des Computerprogramms oder unter Kontrolle des Computerprogramms erfolgen, sofern nicht ausdrücklich darauf hingewiesen ist, dass einzelne Aktionen durch einen Benutzer des Computerprogramms veranlasst werden. Zumindest bedeutet jede Verwendung des Begriffs "automatisch", dass die betreffende Aktion aufgrund des Computerprogramms oder unter Kontrolle des Computerprogramms erfolgt.

Dem Fachmann ist klar, dass anstelle einer Implementation eines Verfahrens in Software stets auch eine Implementation in Firmware oder in Firm- und Software oder in Firm- und Hardware möglich ist. Daher soll für die hier vorgelegte Beschreibung gelten, dass von den Begriffen Software oder Computerprogramm auch andere Implementationsmöglichkeiten, nämlich insbesondere eine Implementation in Firmware oder in Firm- und Software oder in Firm- und Hardware, umfasst sind.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: eine Automatisierungslösung mit einem Automatisierungssystem und einem gesteuerten oder überwachten technischen Prozess, wobei über ein Gateway eine kommunikative Verbindung zwischen der Automatisierungslösung und der sogenannten Cloud besteht, und
- FIG 2: bis
- FIG 4: im Rahmen des hier vorgeschlagenen Verfahrens verwendete oder erzeugte Daten, wobei einzelne Bezeichner der in den Figuren exemplarisch gezeigten Daten in der Darstellung in FIG 1 sowie im folgenden Text in einer Kurzform (z.B. "S7_Projekt1" = "S7_1") wiedergegeben sind.

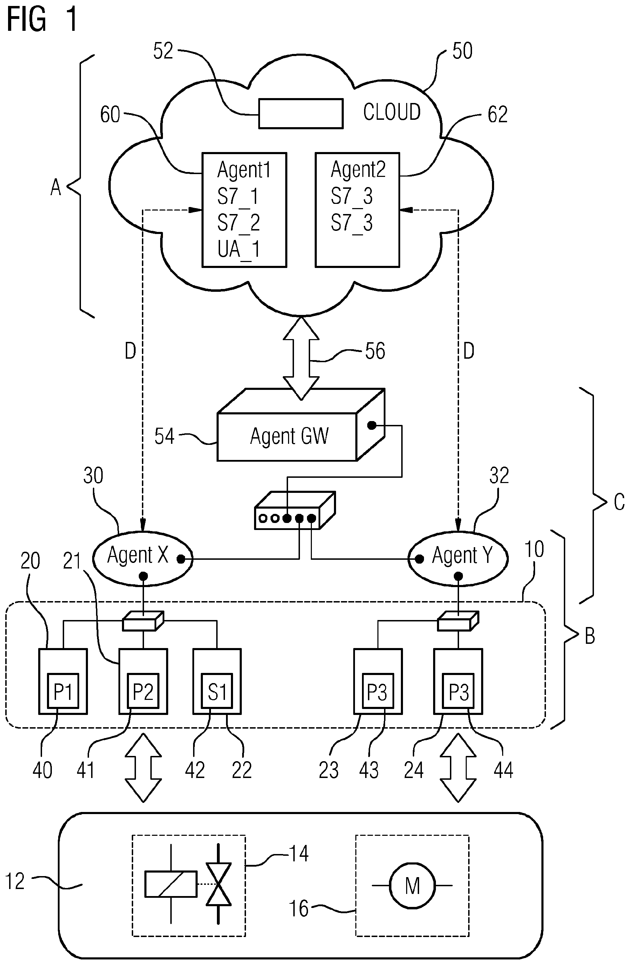

Die Darstellung in FIG 1 zeigt schematisch vereinfacht ein Automatisierungssystem 10, das in grundsätzlich an sich bekannter Art und Weise zur Steuerung und/oder Überwachung eines technischen Prozesses 12 bestimmt und eingerichtet ist. Das Automatisierungssystem 10 und der technische Prozess 12 bilden zusammen eine Automatisierungslösung zum Beispiel für eine automatische Fertigung von Produkten im Rahmen des technischen Prozesses 12 und unter Kontrolle des Automatisierungssystems 10.

Der technische Prozess 12, auf dessen konkrete Form es im Weiteren nicht ankommt, umfasst zum Beispiel Aktoren 14, 16 zur Beeinflussung des technischen Prozesses 12 und Sensoren zum Erhalt von Informationen über den Zustand des technischen Prozesses 12. Bei dem technischen Prozess 12 handelt es sich zum Beispiel um einen Produktionsprozess, einen Chargenprozess und so weiter.

Zur Steuerung und/oder Überwachung des jeweiligen technischen Prozesses 12 umfasst das Automatisierungssystem 10 zumindest ein Automatisierungsgerät 20, üblicherweise eine Mehrzahl kommunikativ miteinander verbundener Automatisierungsgeräte 20, 21, 22, 23, 24. Auf die Art der Automatisierungsgeräte 20-24 und den Umfang des Automatisierungssystems 10 kommt es im Folgenden ebenfalls nicht an.

Dem Automatisierungssystem 10 ist zumindest ein Software-Agent 30, 32 zugeordnet. Die Anzahl und die Verteilung der in FIG 1 dargestellten Agenten 30, 32 ist willkürlich und lediglich als Beispiel zu verstehen. Ein Agent 30, 32 nimmt zum Beispiel einen Messwert oder mehrere Messwerte aus dem technischen Prozess 12 auf und/oder aktiviert oder deaktiviert einen Aktor 14, 16 oder mehrere Aktoren 14, 16 im technischen Prozess 12 oder nimmt eine sonstige Ansteuerung bezüglich eines Aktors 14, 16 (zum Beispiel eine Sollwertvorgabe für eine Geschwindigkeitsregelung) vor.

Im Falle einer Aufnahme eines Messwerts oder mehrerer Messwerte aus dem technischen Prozess 12 führt der jeweilige Agent 30, 32 eine Leseoperation durch. Eine solche Leseoperation bezieht sich üblicherweise auf eine Variable eines von dem Automatisierungssystem 10 - nämlich einem der davon umfassten Automatisierungsgeräte 20-24 - ausgeführten Steuerungsprogramms 40, 41, 42, 43, 44. Das Ergebnis der Leseoperation oder mehrerer derartiger Leseoperationen ist zum Beispiel für einen in der sogenannten Cloud 50 vorgehaltenen Dienst 52 bestimmt und das jeweilige Datum muss folglich an die Cloud 50 übermittelt werden. Bei dem Dienst 52 handelt es sich zum Beispiel um einen Dienst 52 zum Speichern und/oder Auswerten der übermittelten Daten.

Als Schnittstelle zwischen dem Automatisierungssystem 10 einerseits und der Cloud 50 andererseits und damit als Schnittstelle zwischen einem Agenten 30, 32 und einem Dienst 52 in der Cloud 50 fungiert im Folgenden entsprechend der üblichen Terminologie ein als Gateway 54 bezeichnetes Vermittlungsgerät. Dieses ist einerseits mit dem Automatisierungssystem 10 direkt oder indirekt verbunden, zum Beispiel über Ethernet, und andererseits mit der Cloud 50 über das Internet 56 verbunden.

Die für eine Übermittlung von Daten von Agenten 30, 32 eines Automatisierungssystems 10 in die Cloud 50, zum Beispiel zu einem Dienst 52, nötigen Informationen wurden bisher von einem Projektierer oder Programmierer manuell konfiguriert. Gemäß der hier vorgeschlagenen Neuerung erfolgt dies zumindest zum Teil automatisch.

Als Basis für die hier vorgeschlagene automatische Ermittlung von Daten zu einem Automatisierungssystem 10, nämlich von Hierarchien und Beziehungen in einem Automatisierungssystem 10, sind einige Anfangsinformationen für die beteiligten Geräte und Einheiten notwendig.

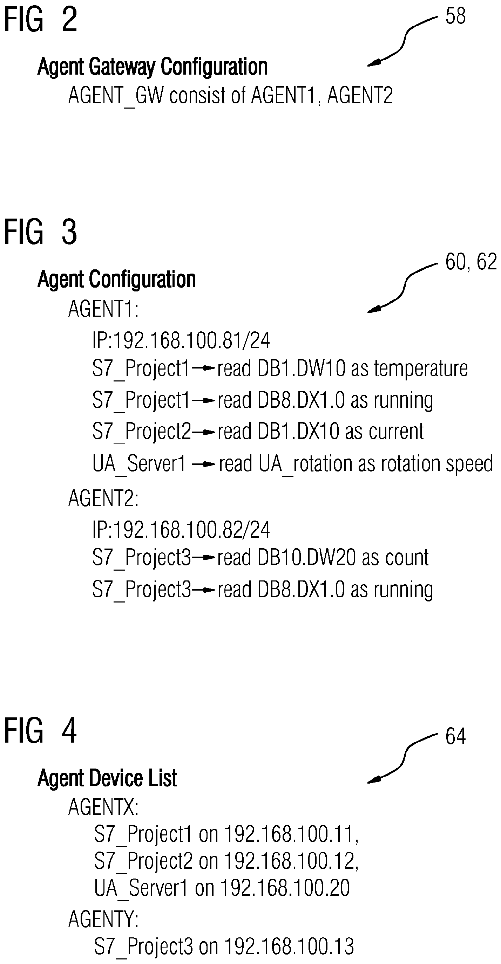

Das Gateway 54 erhält in Form einer manuell eingegebenen Gatewaykonfiguration 58 (FIG 2) Informationen darüber, für welche Agenten 30, 32 es zuständig ist (welche Agenten 30, 32 es kennt oder kennen muss):
AGENT_GW *consist of* { Agent1, Agent2 }

Des Weiteren muss ein Gateway 54 bezüglich des oder jedes Agenten 30, 32, für den bzw. die es zuständig ist, weitere Informationen erhalten. Zum Beispiel muss das Gateway 54 eine Information darüber erhalten, welche Datenquellen ein Agent 30, 32 benutzt und/oder auf welche Datenquellen ein Agent 30, 32 zugreifen kann. Diese Informationen erhält das Gateway 54 aus der Cloud 50, nämlich aus einer in der Cloud 50 vorgehaltenen und ursprünglich ebenfalls manuell eingegebenen Agentenkonfiguration 60, 62 (FIG 1 und FIG 3):
Agentl *has* { S7_1, S7_2, UA1 } *as a data source*
Agent2 *has* { S7_3, S7_3} *as a data source*

In der jeweiligen Anlage, also dem jeweiligen Automatisierungssystem 10 und/oder dem gesteuerten/überwachten technischen Prozess 12, beschafft sich der Agent 30, 32 eine Übersicht über dort vorhandene Geräte, Dienste, Datenquellen und dergleichen und es wird eine im Folgenden als Geräteliste 64 (FIG 4) bezeichnete Liste mit in der Automatisierungslösung (Anlage) 10, 12 vorhandenen und für den Agenten 30, 32 erreichbaren Geräten, Diensten und dergleichen erzeugt:
AgentX *sees* { P1, P2, S1 }
AgentY *sees* { P3 }

Die exemplarisch verwendeten symbolischen Bezeichner "P1" bzw. "S7_Project1", "P2" bzw. "S7_Project2" usw. für einzelne Steuerungsprogramme 40, 41 usw. sind auch in der Darstellung in FIG 1 enthalten und eine Datenquelle ist demnach zum Beispiel ein bei der Steuerung und/oder Überwachung des jeweiligen technischen Prozesses 12 oder eines Teilprozesses innerhalb des technischen Prozesses 12 ausgeführtes Steuerungsprogramm 40-44 zusammen mit den davon erzeugten und/oder be- oder verarbeiteten Daten.

Ebenfalls in der Automatisierungslösung 10, 12 ermittelt das Gateway 54 alle für das Gateway 54 erreichbaren Agenten 30, 32 der Automatisierungslösung 10, 12 und erzeugt eine im Folgenden als Agentenliste bezeichnete Liste, also eine Liste mit für das jeweilige Gateway 54 erreichbaren Agenten 30, 32 der Automatisierungslösung 10, 12:
AGENT_GW *sees* { AgentX, AgentY }

Auf Basis der jetzt vorliegenden Daten, nämlich den vom Benutzer eingegebenen Informationen einerseits und den automatisch ermittelten Informationen der Geräteliste 64 sowie der Agentenliste andererseits, kann automatisch ein Bezug zwischen beiden Datengruppen hergestellt werden. Zur schnellen Übersicht sind die Daten in der nachfolgenden Tabelle gegenübergestellt:

| eingegebene Informationen | automatisch ermittelte Informationen |
|---|---|
| AGENT_GW *consist of* { Agent1, Agent2 } | AGENT_GW *sees* { AgentX, AgentY } |
| Agent1 *has* { S7_1, S7_2, UA1 } *as a data source* | AgentX *sees* {P1, P2, S1 } |
| Agent2 *has* { S7_3, S7_3 } *as a data source* | AgentY *sees* { P3 } |

Anhand der erkennbar übereinstimmenden Strukturen der eingegebenen Informationen sowie der automatisch ermittelten Informationen kann automatisch ein Bezug zwischen den beiden Datengruppen hergestellt werden. Daraus ergibt sich, dass es sich bei dem im Rahmen der eingegebenen Informationen als "Agent1" bezeichneten Agenten um den in den automatisch ermittelten Informationen als "AgentX" ausgewiesenen Agenten 30, 32 (in der Darstellung in FIG 1 mit der Bezugsziffer 30 bezeichnet) handeln muss. Genauso ergibt sich, dass es sich bei dem im Rahmen der eingegebenen Informationen als "Agent2" bezeichneten Agenten 30, 32 um den in den automatisch ermittelten Informationen als "AgentY" ausgewiesenen Agenten 30, 32 (in der Darstellung in FIG 1 mit der Bezugsziffer 32 bezeichnet) handeln muss.

Das Gateway 54 kann auf Basis der Geräteliste 64 und der Agentenkonfiguration 60, 62 jedem Agent 30, 32 zuweisen, welche Daten dieser aus der Automatisierungslösung 10, 12 holen soll. Für den in der Darstellung in FIG 1 mit der Bezugsziffer 30 bezeichneten Agenten "AgentX" bedeutet dies zum Beispiel, dass dieser aus dem Steuerungsprogramm 40 mit der symbolischen Bezeichnung "S7_Projekt1" (oder "S7_1") aus dem Datenbaustein DB1 das Datenwort DW10 ausliest und dass dieses eine Temperatur darstellt (FIG 3: "S7_Project1 -> read DB1.DW10 as temperature").

Für diese Zuweisung wird der für den jeweiligen Agenten 30, 32 relevante Teil der Agentenkonfiguration 60, 62 in einer für den Agenten 30, 32 verarbeitbaren Form auf den jeweiligen Agenten 30, 32 heruntergeladen. Damit ist der Agent 30, 32 konfiguriert, nämlich beim hier gewählten Beispiel zum Lesen von Daten aus der Automatisierungslösung 10, 12 konfiguriert. Bevor diese Konfiguration eines Agenten 30, 32 mittels des Gateways 54 erfolgt ist, hat der jeweilige Agent 30, 32 keine Information bezüglich der zu lesenden (oder zu schreibenden) Daten. Im Rahmen einer solchen Zuweisung/Konfiguration liegen dem Agenten 30, 32 sämtliche Informationen bezüglich der zu lesenden (oder zu schreibenden) Daten vor.

Bei den Daten, die aus der Cloud 50 auf einen Agenten 30, 32 geladen werden, kann es sich neben solchen Konfigurationsdaten zum Beispiel auch um Software-Updates handeln. Weitere Beispiele für aus der Cloud 50 auf einen Agenten 30, 32 ladbare Daten sind Sicherheitsinformationen und sogenannte "Onboarding Information", also Daten, die ein Agent 30, 32 benötigt, um eine Verbindung mit der Cloud 50 aufzunehmen. Diese Aufzählung ist nicht abschließend und weitere aus der Cloud 50 auf einen Agenten 30, 32 herunterladbare Daten sind denkbar.

Damit kann das hier vorgeschlagene Verfahren kurz wie folgt dargestellt werden (die zur Bezeichnung der einzelnen Schritte verwendeten Buchstaben finden sich in der Darstellung in FIG 1) :
Erster Schritt "A": In der Cloud 50 befinden sich in Form der Agentenkonfiguration 60, 62 Informationen dazu, welchem Agent 30, 32 welche Aufgaben zugewiesen sind, nämlich zum Beispiel das Sammeln von Daten von einer bestimmten Quelle und eine eindeutige Adressierung innerhalb der Quelle.

Zweiter Schritt "B": Die von der Automatisierungslösung 10, 12 umfassten Agenten 30, 32 (AgentX, AgentY) sammeln in ihrem lokalen Netzwerk Informationen über erreichbare Quellen und stellen diese Information über ein Gateway 54 bereit.

Jeder Agent 30, 32 sowie jedes Gateway 54 kann dafür über zwei Schnittstellen verfügen, nämlich zum einen eine Schnittstelle zur jeweiligen Automatisierungslösung 10, 12 (Anlagenschnittstelle) und zum anderen eine Schnittstelle zum Internet 56 (Internetschnittstelle). Jeder Agent 30, 32 ermittelt dabei alle an dessen Anlagenschnittstelle angeschlossenen oder darüber erreichbaren Geräte, Dienste usw. Dies erfolgt mittels grundsätzlich an sich bekannter sogenannter Discovery-Verfahren. Die ermittelten Informationen werden in einer Geräteliste 64 gespeichert und an das Gateway 54 übermittelt.

Dritter Schritt "C": Aus den gesammelten Informationen (Geräteliste 64) einerseits sowie der in der Cloud 50 vorhandenen Agentenkonfiguration 60, 62 andererseits kann eine Hierarchie der Agenten 30, 32 aufgebaut werden.

Vierter Schritt "D": Zu der ermittelten Hierarchie kann die passende Konfiguration - die ursprünglich in der Cloud 50 vorhandene Agentenkonfiguration 60, 62 - an die jeweiligen Agenten 30, 32 verteilt werden. Auf Basis der damit erfolgten Konfiguration der Agenten 30, 32 sind diese in die Lage versetzt, entsprechend der jeweiligen Konfiguration von den angeschlossenen Quellen die in der Agentenkonfiguration 60, 62 spezifizierten Daten zu sammeln.

Ein Benutzer muss also nicht die Agenten 30, 32 einer Automatisierungslösung 10, 12 einzeln konfigurieren. Vielmehr werden die für deren Konfiguration benötigten Daten über ein Gateway 54 verteilt. Dieses bestimmt anhand der im dritten Schritt "C" ermittelten Hierarchie der Agenten 30, 32 die für die einzelnen Agenten 30, 32 bestimmten Konfigurationsdaten der Agentenkonfiguration 60, 62 und lädt diese auf den jeweiligen Agenten 30, 32.

Kurz zusammengefasst lässt sich die hier vorgeschlagene Neuerung wie folgt darstellen: Indem die einer Automatisierungslösung 10, 12 zugeordneten Agenten 30, 32 ihre Umgebung erfassen, nämlich lokal erreichbare Geräte, Dienste, Datenquellen und dergleichen, entsteht eine Geräteliste 64. Diese wird automatisch mit einer in der Cloud 50 verfügbaren Agentenkonfiguration 60, 62 verglichen. In der Geräteliste 64 ist jeder Agent 30, 32 einer Automatisierungslösung 10, 12 mit Daten vertreten, die gewissermaßen einen Fingerabdruck des Agenten 30, 32 repräsentieren. Einen vergleichbaren Fingerabdruck umfasst die Agentenkonfiguration 60, 62. Die Vergleichbarkeit ergibt sich daraus, dass im Rahmen der Agentenkonfiguration 60, 62 zum Beispiel spezifiziert ist, auf welche Datenquellen ein Agent 30, 32 zugreifen soll. In der Geräteliste 64 ergibt sich, dass der Agent 30, 32 zumindest auf diese Datenquellen physikalisch und kommunikativ zugreifen kann. Bei einem in der Agentenkonfiguration 60, 62 und der Geräteliste 64 übereinstimmenden oder ausreichend übereinstimmenden derartigen Fingerabdruck können die in der Agentenkonfiguration 60, 62 enthaltenen Konfigurationsdaten an den jeweiligen Agenten 30, 32 übertragen werden. Der auf diese Weise konfigurierte/parametrierte Agent 30, 32 kann damit nicht nur auf die erreichbaren Datenquellen grundsätzlich zugreifen, sondern erhält mit den Daten aus der Agentenkonfiguration 60, 62 auch die notwendigen Informationen über Adressen, einzelne Datenworte und dergleichen. Ein Agent 30, 32, der sich nur dadurch identifiziert, welche Geräte, Dienste, Datenquellen und dergleichen er grundsätzlich erreichen kann, wird damit nach dem hier vorgeschlagenen Ansatz automatisch konfiguriert und/oder parametriert.

## Patentansprüche

1. Verfahren zur automatischen Konfiguration eines oder mehrerer Software-Agenten in einem Automatisierungssystem (10, 12),
wobei dem Automatisierungssystem (10) mehrere Software-Agenten (30, 32) zugeordnet sind,
wobei die Software-Agenten (30, 32) über ein Gateway (54) mit einer Cloud (50) verbunden sind,
wobei in der Cloud (50) für die Software-Agenten (30, 32) jeweils eine Agentenkonfiguration (60, 62) vorgehalten ist,
wobei von zumindest einem Teil der Software-Agenten (30, 32) erfasste Daten bezüglich von dem jeweiligen Software-Agenten erreichbaren wenigstens einem Gerät, Dienst und/oder Datenquelle des Automatisierungssystems von dem Gateway (54) empfangen werden,
wobei vermittels des Gateways (54) im Rahmen einer Verarbeitung einer oder mehrere Agentenkonfigurationen (60, 62) aus der Cloud (50) sowie der erfassten Daten bezüglich von dem jeweiligen Software-Agenten (30, 32) erreichbaren wenigstens einen Gerät, Dienst und/oder Datenquelle eine Konfiguration zumindest eines der dem Automatisierungssystem (10) zugeordneten Software-Agenten (30, 32) vorgenommen wird,
wobei von dem jeweils zu konfigurierenden Software-Agenten (30, 32) erfasste Daten als Geräteliste an das Gateway (54) übermittelt werden,
wobei das Gateway (54) jeweils automatisch bei einer Verarbeitung der Agentenkonfiguration (60, 62) aus der Cloud (50) sowie der Geräteliste Übereinstimmungen in beiden Datengruppen erkennt,
wobei das Gateway (54) jeweils auf Basis erkannter Übereinstimmungen sowie von der Agentenkonfiguration umfasster Daten automatisch und abschließend eine Konfiguration des oder der dem Automatisierungssystem zugeordneten Software-Agenten (30, 32) vornimmt.

## Claims

1. Method for automatically configuring one or more software agents in an automation system (10, 12),
wherein a plurality of software agents (30, 32) are assigned to the automation system (10),
wherein the software agents (30, 32) are connected to a cloud (50) via a gateway (54),
wherein an agent configuration (60, 62) is held for each of the software agents (30, 32) in the cloud (50),
wherein data which are captured by at least some of the software agents (30, 32) and relate to at least one device, service and/or data source of the automation system which can be reached by the respective software agent are received by the gateway (54),
wherein, in the course of processing one or more agent configurations (60, 62) from the cloud (50) and the captured data relating to at least one device, service and/or data source which can be reached by the respective software agent (30, 32), at least one of the software agents (30, 32) assigned to the automation system (10) is configured by means of the gateway (54),
wherein data captured by the respective software agent (30, 32) to be configured are transmitted to the gateway (54) as a list of devices,
wherein, when processing the agent configuration (60, 62) from the cloud (50) and the list of devices, the gateway (54) respectively automatically identifies matches in both data groups,
wherein the gateway (54) automatically and finally configures the software agent(s) (30, 32) assigned to the automation system in each case on the basis of identified matches and data included in the agent configuration.

## Revendications

1. Procédé de configuration automatique d'un ou de plusieurs agents logiciels dans un système (10, 12) d'automatisation,
dans lequel plusieurs agents (30, 32) logiciels sont associés au système (10) d'automatisation,
dans lequel les agents (30, 32) logiciels sont reliés à un nuage (50) par une passerelle (54),
dans lequel il est prévu respectivement une configuration (60, 62) d'agents pour les agents (30, 32) logiciels dans le nuage (50),
dans lequel on reçoit par la passerelle (54) des données, acquises par au moins une partie des agents (30, 32) logiciels, concernant au moins un appareil, un service, et/ou une source de données du système d'automatisation pouvant être atteint par l'agent logiciel respectif,
dans lequel au moyen de la passerelle (54) dans le cadre d'un traitement d'une ou de plusieurs configurations (60, 62) d'agents à partir du nuage (50) ainsi que des données acquises concernant le au moins un appareil service et/ou source de données pouvant être atteint par l'agent (30, 32) logiciel respectif, on effectue une configuration d'au moins l'un des agents (30, 32) logiciels associés au système (10) d'automatisation,
dans lequel on transmet à la passerelle (54) sous forme de liste d'appareils des données acquises par l'agent (30, 32) logiciel à configurer respectivement,
dans lequel la passerelle (54) détecte automatiquement lors d'un traitement de la configuration (60, 62) d'agent à partir du nuage (50) ainsi que de la liste d'appareils des coïncidences dans les deux groupes de données,
dans lequel la passerelle (54) effectue respectivement sur la base des coïncidences reconnues ainsi que des données acquises par la configuration d'agent automatiquement et finalement une configuration du ou des agents (30, 32) logiciels associés au système d'automatisation.
